# EUROPÄISCHE PATENTANMELDUNG

(11) **EP 1 608 172 A1**
(43) Veröffentlichungstag der Anmeldung: **21.12.2005**
(21) Anmeldenummer: 05009261.8
(22) Anmeldetag: 27.04.2005
(51) Int. Cl.: H04N 7/16, A63J 23/02, E04H 3/22, G03B 31/06, G03B 21/00, H04N 5/74

(54) **Verfahren und Vorrichtung zur Steuerung einer Kombination aus analogen und digitalen Filmvorführeinrichtung**

(30) Priorität: 18.06.2004 DE 102004029449
(71) Anmelder: Rohrseitz, Gert, 90513 Zirndorf (DE)
(72) Erfinder: Kummeth, Richard, 82418 Murnau (DE); Korneder, Johann Anton, 81827 München (DE)
(74) Vertreter: Neidl-Stippler, Cornelia

(57) **Zusammenfassung**

Die Erfindung betrifft ein Verfahren zur Steuerung einer Kombination aus analogen und digitalen bildgebenden Einrichtungen, die eine Kinoautomatisierung (4), mindestens einen analogen Filmprojektor (5), mindestens einen digitalen Projektor (2), mindestens eine Tonanlage (18), Saalbeleuchtung (13) und ggf. weitere Vorrichtungen, wie Antrieb der Vorhänge (12), Parfümiersysteme und dgl. umfasst, bei dem Decoder (1), der mit dem digitalen Projektor (2) und der Kinoautomatisierung (4) direkt verbunden ist, Bilddaten an den digitalen Projektor (2), ggf. Tondaten an die mindestens eine Tonanlage (18) übermittelt;

## Beschreibung

Die Erfindung betrifft ein Verfahren zur Steuerung einer Kombination aus analogen und digitalen Filmvorführeinrichtungen nach dem Oberbegriff des Patentanspruches 1 sowie eine Vorrichtung nach dem Oberbegriff des Patentanspruches 2. Sie bezieht sich allgemein auf das Gebiet Koordination und Steuerung von analogen und digitalen Projektoren und weiteren Kinoeinrichtungen bspw. für ein Filmtheater zur Darstellung von Kinofilmen und Werbefilmen.

Obwohl die Erfindung im folgenden anhand von Filmtheatersystemen beschrieben wird, ist sie keineswegs auf dieses begrenzt, sondern kann immer dann angewendet werden, falls digitale Filmdaten decodiert und von mehreren Einrichtungen, wie Tonanlagen und bildgebenden Einrichtungen wiedergegeben werden.

Filmtheatersysteme haben verschiedene Einrichtungen, unter anderem einen analogen Filmprojektor (meist ein 35 mm Filmvorführgerät) nachstehend als analoger Projektor bezeichnet, zur Projizierung eines analogen Films auf eine Kinoleinwand, eine Tonanlage, die Tonsignale vom analogen Filmprojektor nach Auslesen der Audiospur auf dem Film erhält und diese wiedergibt (dies umfasst auch Mehrkanalton od. dgl.); eine Kinoautomatisierung - d.h. eine einfache Steuereinheit, welche die zeitliche Abfolge verschiedener Einrichtungen nach einem festen Steuerprogramm für den Kinosaals steuert - wie: Starten des analogen Filmprojektors, Ansteuern einer elektrischen Antriebseinheit zum Öffnen und Schließen des Kinovorhangs; Start der Hintergundmusik, Regelung der Helligkeit des Saals etc. und so Bedienungspersonal, das früher für diese Schritte benötigt wurde, einzusparen.

Kinoautomatisierung für Filmtheater ist z.B. aus der DE 23 08 874 bekannt. Die Tonanlage kann über einen digitalen Zeitcode im Tonfilmstreifen oder einer Schaltfolie vom analogen Projektor gesteuert werden.

In der Regel wird vor Beginn des Hauptfilms ein Vorspannfilm bzw. Werbung gezeigt. Der Vorspannfilm enthält Filmausschnitte neuer Filme, die demnächst in dem Filmtheater gezeigt werden, kann aus einem 35 mm Film bestehen und in Verbindung mit dem Hauptfilm vom gleichen Filmhauptprojektor gezeigt werden. Im Vorspannfilm befinden sich auch Werbefilme welche die verschiedensten Produkte bewerben und dem Filmtheaterbesucher näher bringen. Der Werbefilm kann auch aus einzelnen Werbespots bestehen und ist ebenfalls im 35 mm Filmformat erstellt. Alle Filmabschnitte, Vorspannfilm und Hauptfilm, wurden zu einer großen Filmrolle zusammengefügt und benötigten somit zur Wiedergabe nur einen analogen Filmprojektor, der, ausgestattet mit der entsprechenden Steuereinheit einen automatischen Ablauf einer Filmtheatervorstellung ermöglichte.

Es gibt bereits Filmvorführsysteme, bei denen die Darstellung der Kino- Filme und der Werbefilme über getrennte Anzeigevorrichtungen oder Projektoren erfolgen kann. Hauptfilm und der Vorspannfilm werden weiterhin über den Filmhauptprojektor auf die Kinoleinwand projiziert, während für die Projektion der Werbefilme eine zusätzliche Vorrichtung benutzt wird.

Im Filmtheater können diese vorgenannten Vorrichtungen durch weitere ergänzt werden. Diese Ergänzung kann ein klassischer Diaprojektor, der zur Projizierung von Einzeibildem auf die Kinoleinwand dient, sein. Diabilder werden als Werbemittel vor Beginn des Hauptfilms und / oder des Vorspannfilmes eingesetzt. Solche Diaprojektoren können über eine Kinoautomatisierung, wie in der US 3,907,419 beschrieben, zur Steuerung mit dem Filmhauptprojektor verbunden sein. Eine andere Ergänzung kann ein - bevorzugt digitaler - Projektor sein, der ebenfalls für den Einsatz von Werbemitteln benutzt werden kann. Hierzu stellen die Marketingindustrie oder lokale Werbefirmen die Werbung in digitalem Format auf entsprechenden Datenträgem dem Filmtheaterbetreiber zur Präsentation vor dem Hauptfilm und/ oder Vorspannfilm zur Verfügung.

Ein Nachteil dieser bekannten Vorführsysteme in Filmtheatern besteht für die Werbebranche darin, dass die Systeme, die zur Werbung verwendet werden, statisch sind, d.h. die Aktualisierung der Informationen der in den 35 mm Filmen, Dias oder Videofilmen enthaltenen Werbung ist sehr zeit- und kostenintensiv. Der Kunde wünscht aber häufig eine sehr aktuelle, schnelle Werbeaktion, um ggf. unerwartet schnell auftretende Auftragsmängel beseitigen zu können, Sonderaktionen anzuzeigen od. dgl. Derartige Werbung ist häufig auch nur lokal begrenzt - bspw. Restaurantwerbungen oder aber lokale Ereignisse, wie Volksfeste Die gegenwärtig vorhandenen Werbeanzeigen in Filmtheatern sind daher mit einer Reihe von Problemen behaftet.

Eine Lösung wurde darin gesehen, durch Datenkommunikation via Satellit oder per ISDN im Festnetz die Werbedaten digital an die Filmtheater zu senden und so für digitale Projektion zeitgerecht zur Verfügung zu stellen. Dadurch können auch kurzfristig auftretende Aufträge zeitgerecht bearbeitet werden, was insbesondere für lokal agierende Werbekunden wichtig ist.

Digitalisierte Werbefilme bzw. Werbespots können von einer zentralen Stelle oder einer Agentur, welche die digitalen Werbefilme erstellt, für die Vorführung in einem speziellen Kino oder einer Filmtheaterkette aktuell aufbereitet und dem entsprechenden Kinoserver per DFÜ zur Verfügung gestellt werden. Ein Verfahren zur zentralen Organisation der Vorstellungen digitalisierter Bild- und Tonsequenzen in mehreren Filmtheatern ist in der DE 19936720 offenbart.

Ein digitales Filmvorführsystem beseitigt die Langsamkeit der analogen Kino- Darstellung, da es keiner manuellen Montage von Werbefilmen durch einen Vorführer bedarf, die Werbung kann sehr schnell aktualisiert und spezialisiert, also abgestimmt auf das Kinopublikum und den Hauptfilm hergestellt und gezeigt werden. Diese digitalen Werbefilme erfüllen zwar noch nicht die gleichen Qualitätsanforderungen hinsichtlich Farbtiefe etc. wie ein analoger Film - haben aber den unschätzbaren Vorteil schnell und mit verhältnismässig geringem Aufwand herstellbar und übermittelbar zu sein.

Es können herkömmliche Vorrichtungen des Kino-Filmvorführsystems, wie ein analoger Filmprojektor, eine Kinoautomatisierung, Tonanlagen und weitere Kinoeinrichtungen, beibehalten werden, d.h. es werden die Haupt-Kinofilme als Filmrollen an die einzelnen Filmtheater verschickt und dort mit dem analogen Filmhauptprojektor vorgeführt. Vor diesen Kinofilm wird ein für die Vorführung in speziellen Filmtheatern zur Präsentation von Werbespots, die Kunden in einem Filmtheater gebucht haben digital zusammengestellter und dem Kino übermittelter Werbefilm über einen digitalen Projektor, auch als "Beamer" bezeichnet, projiziert .

Dabei stehen in jedem Kinosaal ein analoger Filmhauptprojektor, eine Tonanlage, ein digitaler Projektor und Mittel zur Steuerung des digitalen Projektors und/ oder Mittel zur Steuerung der Kinoautomatisierung für die Kinoeinrichtungen besitzt, zur Verfügung.

Beim Einsatz von handelsüblichen digitalen Projektoren in Filmtheatern stellt sich das Problem, dass beim Einschalten der digitalen Projektoren ein herstellerspezifisches Projektionsbild auf der Kinoleinwand während der Anwärmphase erzeugt wird. Die Projizierung des vom Hersteller fest hinterlegten Standbildes durch den digitalen Projektor auf die Kinoleinwand oder den Vorhang ist nicht erwünscht. Nach der Anwärmphase erzeugt der digitale Projektor ein Schwarzbild, das aber immer noch bis etwa 10 % Restlicht enthält und dies auf die Kinoleinwand oder den Vorhang, oder in eine analoge Filmvorführung eines analogen Projektors hineinprojiziert und dabei zu unerwünschten Farbveränderungen führt. Ein weiteres Problem digitaler Projektoren besteht darin, dass diese bei häufigem An- und Abschalten innerhalb kürzerer Zeit - beispielsweise innerhalb einer Kinovorführung - eine deutlich verkürzte Lebensdauer des sehr teuren Leuchtmittels zu verzeichnen haben. Das System ist daher nicht sehr stabil und es kann zu unerwartet häufigen Ausfällen des digitalen Projektors kommen und aufwendigen Wartungsarbeiten. Ferner müssen Ersatzteile vorgehalten werden. Bei ungünstigen Bedingungen kann es sogar zu einer Explosion des Leuchtmittels unter Zerstörung des digitalen Projektors kommen.

Es ist daher Aufgabe der Erfindung, eine technische Lösung für die Probleme, die sich aus den Eigenheiten der digitalen Projektoren in einer Kombination aus analogen und digitalen Filmvorführsystem ergeben, vorzuschlagen.

Die Aufgabe wird erfindungsgemäß.durch ein Verfahren mit den Merkmalen des Patentanspruches 1 und die Vorrichtung mit den Merkmalen des Patentanspruches 2 gelöst. Vorteilhafte Weiterbildungen ergeben sich aus den abhängigen Ansprüchen.

Dadurch, dass nun der digitale Projektor erfindungsgemäß durch die Kinoautomatisierung ein einziges Mal rechtzeitig vor der Vorführung angeschaltet werden kann, weil dessen Strahlen über die Abblendeinrichtung zu erwünschten Zeiten abgeblendet/abgelenkt werden, kann vermieden werden, dass das herstellerspezifische Standbild sichtbar wird, ein Abschalten des digitalen Projektors vermieden und die Lebensdauer der Leuchtmittel deutlich verlängert werden. Ferner kann Restlichtprojektion auf die Kinoleinwand, welche die Bildqualität der analogen Bildprojektion in negativer Weise beeinflusst, ausgeschlossen werden.

Wichtig ist die im Strahlengang des digitalen Projektors angeordnete Abblendvorrichtung, die beispielsweise aus einer steuerbaren Blende, einer mechanischen Klappe, einem gesteuert bewegbaren Graukeil, einem schwenkbaren Spiegel bestehen kann. Die Abblendvorrichtung kann in den Strahlengang des digitalen Projektors ein- oder ausgefahren werden. Die Abblendvorrichtung kann von der Kinoautomatisierung nach einem vorgegebenen Zeitprogramm, oder aber durch den Decoder entsprechend einem im Datenstrom enthaltenen Signal betrieben werden.

Die Abblendeinrichtung kann auch eine Blende aufweisen, die geöffnet oder geschlossen wird. Bei offener Blende ist der Strahlengang des zu projizierenden Bildes oder Filmes zur Kinoleinwand frei. Der Strahlengang des digitalen Projektors kann aber auch durch optische Mittel (Spiegel etc.) geschlossen werden. Auch andere konstruktive Vorrichtungen, die den Strahlengang des austretenden Bildes/Filmes verschließen und öffnen, sind denkbar.

Weitere Vorteile und Merkmale der Erfindung ergeben sich für den Fachmann anhand der Lektüre der nachfolgenden Beschreibung, in der ein Ausführungsbeispiel der Erfindung anhand der schematischen Zeichnungen näher erläutert ist. Es zeigt
- Fig. 1: eine schematische Darstellung einer erfindungsgemäßen Vorrichtung, und
- Fig. 2: ein Blockdiagramm eines erfindungsgemässen Verfahrens

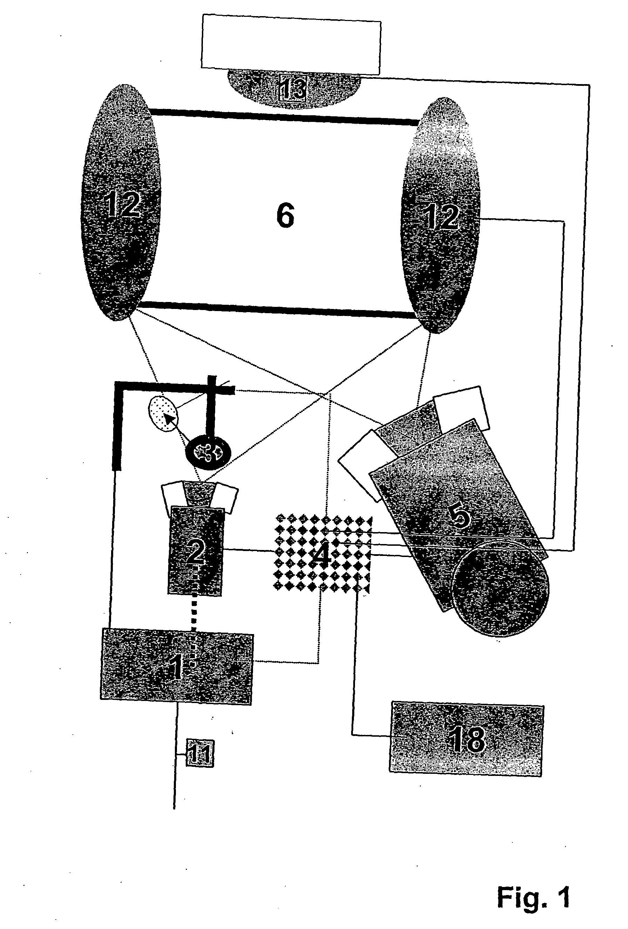

Fig.1 zeigt schematisch eine Steuerung eines analogen und eines digitalen Projektors 5, 2 in einem Kinosaal. Selbstverständlich ist die Erfindung nicht auf diese Anzahl begrenzt, sondern es können auch mehr digitale und oder analoge Projektoren angeschlossen und gesteuert werden.

Ein Decoder 1, der über einen Datenübertragungsweg 11, wie eine Leitung oder aber drahtlos, einen digitalen Datenstrom erhält, ist dazu mit Mitteln ausgestattet, um die mit ihm verbundenen Vorrichtungen und Einrichtungen mit durch ihn bearbeiteten Daten zu versorgen bzw. decodierte Steuersignale weiterzugeben. Insbesondere erkennt er entsprechende Signale im Datenstrom 11 und übermittelt diese und an die Kinoautomatisierung 4, die das Ein- und Ausschalten von Geräten steuert.

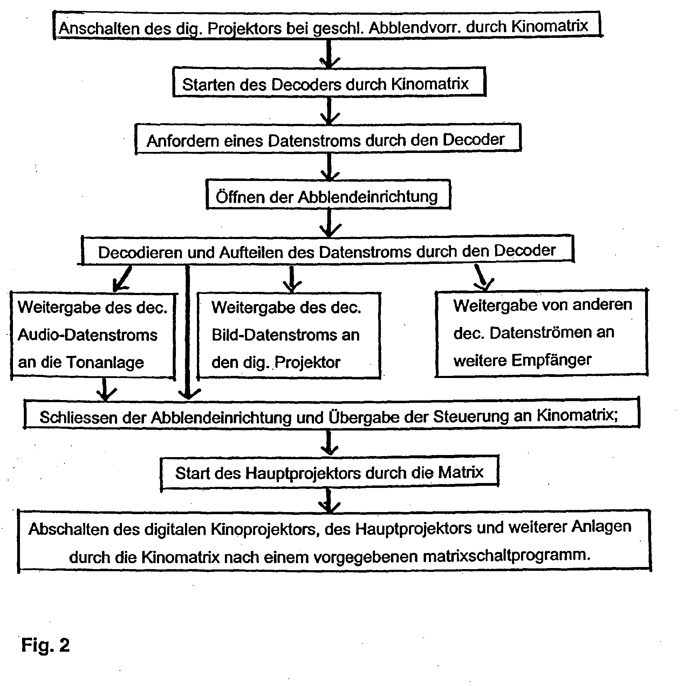

Das erfindungsgemäße Verfahren ist in Fig.2 näher beschrieben.

Das Filmvorführsystem umfasst eine Kinoautomatisierung 4 zum Steuern einer Kombination aus analogen und digitalen Filmvorführsystemen, mit mindestens einem digitalen Projektor 2 , einer Abblendvorrichtung 3, der Tonanlage 18, Saalbeleuchtung 13 und weiteren Anlagen, wie Vorhangantrieb, Kinosaalbeleuchtung etc. Die Kinoautomatisierung 4 umfasst eine elektronische Schaltung, die ein fest abgespeichertes starres Kinoautomatisierungsteuerprogramm dazu verwendet, in zeitlich vorbestimmter Abfolge die Abblendvorrichtung 3, den digitalen Projektor 2 und den Decoder 1 sowie weitere Vorrichtungen an- und abzuschalten. Die Abblendvorrichtung 3, die im Strahlengang vor dem Objektiv des digitalen Projektors 2 angeordnet ist, ist bei der dargestellten Ausführungsform eine Klappe, die den Strahlengang des zu projizierenden Bildes durch Schließen unterbricht oder öffnet und somit eine Projektion des digitalen Projektors, bspw. den Werbetrailer, auf die Kinoleinwand 6 freigibt.

Das Verfahren zum Steuern der Filmvorführung erfolgt über die Kinoautomatisierung 4, die als zentrales Steuerungszentrum die übrigen Bestandteile des Systems nach einem starren Kinoautomatisierungprogramm startet.

Ferner umfasst das Filmvorführsystem eine Tonanlage 18.

Beispielhaft ist in Fig. 2 ein automatischer Ablauf einer Filmtheatervorstellung beschrieben.

Wie in Fig. 2 gezeigt, schaltet weit vor Beginn einer Filmtheatervorstellung die Kinoautomatisierung 4 nach dem fest installierten Kinoautomatisierungzeitprogramm den digitalen Projektor 2 an, wodurch die Projektionslampe des digitalen Projektors 2 die für den Betrieb der Projizierung der Werbefilme notwendige Betriebstemperatur erreichen kann. Während der Aufwärmphase erhält der digitale Projektor 2 noch keine Signale von der Decodereinheit 1. Der digitale Projektor 2 projiziert aber bereits das vom Hersteller der Geräte fest hinterlegte Standbild. Durch die geschlossene Abblendvorrichtung 3 wird aber verhindert, dass dieses auf den Vorhang oder die Kinoleinwand projiziert wird - der Projektor 2 schliesst die Abblendvorrichtung 3, falls diese geöffnet ist. Der Status der Abblendvorrichtung 3 wird steuerungstechnisch über die Datenleitung überprüft. Ist der Strahlengang nicht unterbrochen, erhält die Abblendvorrichtung 3 von der Kinoautomatisierung 4 oder dem Decoder 1 ein Signal, die Klappe zu schließen und den Strahlengang zu unterbrechen.

Zu in der Steuerungssoftware hinterlegten Zeiten oder Schaltschritten wird über die Kinoautomatisierung 4 der Decoder 1, der analoge Projektor 5 und die Tonanlage 18 angeschaltet, sowie der Vorhang 12 und die Saalbeleuchtung 13 angesteuert, bspw. wird die Leuchtstärke der Saalbeleuchtung reduziert und der Vorhang vor der Kinoleinwand geöffnet.

Der Decoder 1 wird jetzt durch die Kinoautomatisierung 4 veranlasst, einen codierten Datenstrom 11 anzufordern. Dieser wird an den Decoder 1 vom Datenprovider/Kinoserver/Steuereinheit übermittelt. Der Decoder 1 decodiert und trennt den Datenstrom in verschiedene Signalströme auf - den Audiodatenstrom, den Bilddatenstrom, ggf. Steuerdaten, bspw. für die Abblendeinrichtung 3. Die decodierten Bilddaten können nun an den digitalen Projektor 2 geliefert werden. Gleichzeitig erhält die Abblendvorrichtung 3 das Steuersignal, die Klappe bzw. Blende zu öffnen, um Projektion auf die Kinoleinwand 6 zu ermöglichen.

Gleichzeitig werden die Tondaten des Datenstroms 11 auf die Tonanlage 18 gespielt und der digitale Film beginnt. Nach Abschluss des digitalen Filmprogramms können nach bestimmten Vorfilmen weitere digitale Filme folgen - der digitale Projektor wird weiter betrieben und nach Ablauf einer hinterlegten Zeit abgeschaltet.

In diese Abfolge können auch Parfümieranlagen, die entsprechende Duftbotschaften parallel zur Botschaft der Werbefilmen, über vom Decoder übermittelte Datenströme über die Kinoautomatisierung oder aber auch direkt gesteuert werden.

Nach Abschluss der digitalen Projektion gemäss dem übermittelten Daten empfängt die Kinoautomatisierung 4 vom Decoder 1 das Signal, die Abschaltroutine für den digitalen Projektor 2 durchzuführen - d.h. ggf. Schliessen der Abblendeinrichtung 3, ggf. Anschalten eines anderen Projektors etc.

Dadurch, dass nun das rechtzeitige Anschalten des digitalen Projektors 2 zu einem schonenden Betrieb der Lampe(n) desselben führt und ein mehrfaches Abschalten vermieden wird, wird die Lebensdauer des Projektorleuchtmittels erheblich verlängert, das Projizieren von Schwarzbildem, die die Bilder des Vorfilms beeinträchtigen können und einen störenden Eindruck auf der Kinoleinwand/Vorhang hinterlassen, vermieden und so ein qualitätsvolleres Kinoprogramm mit hoher Flexibilität und geringeren Unterbrechungen durch Ausfallzeiten ermöglicht.

Selbstverständlich ist die Erfindung nicht auf die Anzahl der dargestellten Einheiten begrenzt, sondern es können auch mehr digitale und oder analoge Projektoren, Tonanlagen etc. angeschlossen und gesteuert werden. Dem Fachmann ist offensichtlich, dass die Erfindung keineswegs auf die erläuterten Ausführungsbeispiele begrenzt ist, sondern lediglich durch den Schutzumfang der beigefügten Ansprüche

## Patentansprüche

1. Verfahren zur Steuerung einer Kombination aus analogen und digitalen bildgebenden Einrichtungen, die eine Kinoautomatisierung (4), mindestens einen analogen Filmprojektor (5), mindestens einen digitalen Projektor (2), mindestens eine Tonanlage (18), Saalbeleuchtung (13) und ggf. weitere Vorrichtungen, wie Antrieb der Vorhänge (12), Parfümiersysteme und dgl. umfasst, **dadurch gekennzeichnet, daß**
ein einen Datenstrom (11) decodierender Decoder (1), der mit dem digitalen Projektor (2) und der Kinoautomatisierung (4) direkt verbunden ist, Bilddaten an den digitalen Projektor (2), ggf. Tondaten an die mindestens eine Tonanlage (18) übermittelt;
die Kinoautomatisierung (4) Schaltsignale liefert; und entsprechend Schaltsignalen vom Decoder (1) die Tonanlage (18), den mindestens einen analogen Filmprojektor (5), ggf. die Vorhänge (12), und den digitalen Projektor (2) an- und abschaltet, und
eine Abblendeinrichtung (3) den Strahlengang des digitalen Projektors (2) freigibt oder unterbricht,
wobei von der Kinoautomatisierung (4) zu einem vorherbestimmten Zeitpunkt entsprechend einem vorgegebenen Zeitprogramm der digitale Projektor (2) bei den Strahlengang unterbrechender Abblendeinrichtung (3) angeschaltet; die Vorhänge (12) ggf. geschlossen, die Saalbeleuchtung (13) angeschaltet, die Tonanlage (18) gestartet wird; zu einem im Zeitprogramm vorgegebenen Zeitpunkt dem analogen Filmprojektor (5) oder dem Decoder (1) ein Startsignal übermittelt und vom Decoder (1) dann über einen Datenübertragungsweg ein Datenstrom (11) mit Bilddaten für den digitalen Projektor (2) abgerufen wird und die Abblendeinrichtung (3) den Strahlengang des digitalen Projektors (2) auf die Kinoleinwand (6) freigibt, wonach der digitale Projektor (2) auf die Kinoleinwand (6) projiziert.

2. Vorrichtung zur Steuerung einer Kombination aus analogen und digitalen Einrichtungen in einem Kinosaal, **gekennzeichnet durch**:
eine Kinoautomatisierung (4), die entsprechend Schaltsignalen eines Decoders (1) eine Tonanlage (18), mindestens einen analogen Filmprojektor (5), ggf. einen Vorhangantrieb für die Vorhänge (12), einen digitalen Projektor (2) an- und abschaltet;
- mindestens einen analogen Filmprojektor (9),
- mindestens einen digitalen Projektor (2) zur Wiedergabe von digitalen Bilddaten,
- mindestens eine Tonanlage (18),
- Saalbeleuchtung (11),
- ggf. weitere Vorrichtungen, wie Antrieb für die Vorhänge (12), Parfümiersysteme und dgl.; und
- einen Decoder (1), der mit dem digitalen Projektor (2) und der Kinoautomatisierung (4) direkt verbunden ist, Bilddaten an den digitalen Projektor (2) und ggf. Tondaten an die mindestens eine Tonanlage (18) übermittelt; der Kinoautomatisierung (4) Schaltsignale liefert; und eine Abblendeinrichtung (3) für den Strahlengang des digitalen Projektors (2) steuert,
wobei:
von der Kinoautomatisierung (4) zu einem vorherbestimmten Zeitpunkt entsprechend einem vorgegebenen Zeitprogramm der digitale Projektor (2) bei den Strahlengang unterbrechender Abblendeinrichtung (3) angeschaltet wird; ggf. die Vorhänge (12) geschlossen, die Saalbeleuchtung (13) angeschaltet, die Tonanlage (18) gestartet wird; zu einem im Zeitprogramm vorgegebenen Zeitpunkt dem analogen Filmprojektor (9) oder dem Decoder (1) ein Startsignal übermittelt, vom Decoder (1) über einen Datenübertragungsweg (11) Bilddaten für den digitalen Projektor (2) abgerufen werden und die Abblendeinrichtung (3) den Strahlengang des digitalen Projektors (2) freigibt, wonach der digitale Projektor (2) auf die Kinoleinwand (6) projiziert.

3. Vorrichtung nach Anspruch 2, **dadurch gekennzeichnet, dass** die Abblendeinrichtung (3) ausgewählt ist aus Klappen, Blenden, Graukeilen, die den Strahlengang des digitalen Projektors (2) unterbrechen, ablenken oder schwächen.
